Europäisches Patentamt

(19) European Patent Office

Office européen des brevets

(11) Numéro de publication: **0 005 297**
**B1**

(12) **FASCICULE DE BREVET EUROPEEN**

(45) Date de publication du fascicule du brevet: **14.04.82**

(21) Numéro de dépôt: **79200206.5**

(22) Date de dépôt: **02.05.79**

(51) Int. Cl.³: **G 01 N 17/00,**
**C 25 B 15/00**

(54) **Procédé et dispositif pour contrôler l'évolution de l'état de surface d'un élément métallique d'une installation contenant une phase ionique.**

(30) Priorité: **05.05.78 FR 7813602**

(43) Date de publication de la demande:
**14.11.79.Bulletin 79/23**

(45) Mention de la délivrance du brevet:
**14.04.82 Bulletin 82/15**

(84) Etats contractants désignés:
**AT BE CH DE FR GB IT LU NL SE**

(56) Documents cités:
**US - A - 3 479 256**
**US - A - 3 878 064**
**US - A - 4 056 445**

(73) Titulaire: **SOLVAY & Cie (Société Anonyme)**
**Rue du Prince Albert, 33**
**B-1050 Bruxelles (BE)**

(72) Inventeur: **Tytgat, Daniel**
**Avenue de Janvier, 23**
**B-1200 Bruxelles (BE)**
Inventeur: **Degols, Albert**
**Avenue des Acacias, 14**
**B-3091 Berg (BE)**
Inventeur: **Dujardin, François**
**Rue Léon Mignon, 22**
**B-1030 Bruxelles (BE)**

(74) Mandataire: **Eischen, Roland**
**Solvay & Cie Département de la Propriété**
**Industrielle Rue de Ransbeek 310**
**B-1120 Bruxelles (BE)**

Courier Press, Leamington Spa, England.

# Procédé et dispositif pour contrôler l'évolution de l'état de surface d'un élément métallique d'une installation contenant une phase ionique

La présente invention vise à contrôler l'évolution de l'état de surface d'une élément métallique d'une installation contenant une phase ionique.

Elle concerne plus particulièrement un procédé et un dispositif pour contrôler l'action exercée sur l'état de surface d'un tel élément par au moins une modification des conditions de travail dans ladite installation.

D'une manière générale, des phénomènes affectant l'état de surface d'un élément métallique dans une installation contenant une phase ionique (par exemple un liquide électrolytique) peuvent être influencés par diverses conditions de travail, parmi lesquelles on peut citer notamment la nature du matériau constituant l'élément considéré, la forme, les dimensions et l'état de surface de celui-ci (notamment sa rugosité), les caractéristiques de la phase ionique traitée dans l'installation (par exemple la valeur du pH), les conditions de pression ou de température dans l'installation, la présence éventuelle d'un couple galvanique entre deux métaux ou alliages différents, une détérioration locale d'un film protecteur d'une paroi de l'installation (par exemple une détérioration de la couche de zinc d'une conduite en acier galvanisé), l'apparition d'une poche d'air localisée dans une zone morte de l'installation, la présence d'un phénomène électrocinétique dans une zone rétrécie d'une canalisation où circule la phase ionique, l'existence d'une protection anodique ou cathodique de l'installation, etc. Par ailleurs, le phénomène affectant l'état de surface de l'élément métallique de l'installation peut être de nature diverse et consister notamment en une corrosion, une érosion ou une incrustation.

C'est ainsi qu'en présence d'eau dure, on assiste généralement à un entartrage progessif des installations métalliques; cet entartrage, particulièrement important dans le cas d'eau chaude, conduit à un colmatage progressif des installations et à une chute du rendement des échangeurs de chaleur.

En présence d'eau agressive telle qu'une eau adoucie, les installations en acier inoxydable ou galvanisé risquent par ailleurs de subir une corrosion locale pouvant parfois conduire à une percée de la paroi de l'installation.

Lorsque les liquides traités contiennent des matières solides en suspension, on observe parfois une érosion locale des parois de l'installation ou une sédimentation dans des zones de l'installation, où le liquide subit une perte de charge subite telles que les élargissements de canalisation ou les coudes.

Des phénomènes d'érosion ou de sédimentation peuvent notamment se présenter dans des installations parcourues par des liquides visqueux tels que des boues ou dans des évaporateurs-cristalliseurs tels que ceux communément utilisés pour le traitement de solutions aqueuses de soude caustique en provenance de cellules d'électrolyse de saumure de chlorure de sodium.

D'une manière générale, il est important de pouvoir cerner avec précision l'influence que ces diverses conditions de travail peuvent exercer isolément ou en combinaison sur l'évolution de l'état de surface d'un élément métallique déterminé d'une installation contenant une phase ionique.

Par ailleurs, pendant l'exploitation d'une installation industrielle, il est important de pouvoir contrôler à tout moment l'évolution de l'état de surface des éléments métalliques constituant l'installation, de manière à déceler rapidement l'apparition d'une anomalie grave dans cet état de surface et à pouvoir alors réagir immédiatement sur les conditions de travail dans l'installation pour remédier à cette anomalie.

Il est connu d'utiliser des méthodes de mesure gravimétrique pour contrôler le caractère corrosif ou incrustant de liquides circulant dans des installations (Materials Protection — Octobre 1962, p.10 à 19 et 27). Ces méthodes connues consistent à extraire périodiquement du liquide, une sonde qui y est normalement immergée, à décaper la sonde des matières qui s'y sont éventuellement incrustées et à peser celles-ci ainsi que la sonde. Une comparaison du poids de la sonde avant et après l'essai permet d'apprécier la nature corrosive de liquide, tandis que le poids des matières incrustées sur la sonde pendant l'essai est une mesure de la nature incrustante du liquide. Ces méthodes connues présentent le désavantage d'être lentes et peu précises, et elles sont incapables de fournir une indication instantanée sur l'état de surface d'une installation dans laquelle on traite le liquide.

On a aussi proposé de contrôler le caractère corrosif de liquides circulant dans des installations métalliques, par une mesure de la variation au cours du temps, de la résistance électrique d'une sonde plongée dans le liquide (Corrosion — National Association of Corrosion Engineers — Vol. 14, March 1958, p. 155t à 158t). Bien que permettant un contrôle précis de l'aggressivité du liquide, ce procédé connu ne permet toutefois pas d'évaluer la vitesse de dégradation du matériau constitutif de l'installation.

Pour pallier cet inconvénient, on a proposé la technique cite de la pente à l'origine, qui consiste à immerger dans le liquide une sonde en un matériau indentique à celui de l'installation examinée et à déterminer le rapport courant/tension autour du potentiel d'équilibre de la sonde.

Pour la mise en pratique de cette technique, on suggère, dans le brevet US-A-4056445, déposé le 26 novembre 1976 aux noms de W.M.Gauntt et E.L.Pye, un procédé selon lequel on réalise une cellule de mesure électrochimique comprenant une électrode de travail constituée de la sonde susdite, une électrode de référence et un électrolyte représentant le liquide corrosif précité, on applique successivement une première différence de potentiel puis une seconde différence de potentiel entre les deux électrodes, on mesure dans chaque cas la densité de courant électrique résultant dans l'électrode de travail avant l'équilibre et on mesure la pente de la droite joignant les deux points définis respectivement par les deux différences de potentiel et le logarithme des densités de courant correspondantes.

Ce procédé connu permet d'évaluer l'évolution de l'état de surface de la sonde, mais il implique l'emploi de sondes précalibrées, coûteuses, qu'il convient de remplacer périodiquement. Il présente le désavantage supplémentaire de ne pas permettre en général des mesures instantanées et continues.

Dans le brevet US-A-3479256, déposé le 8 septembre 1965 aux noms de J.R.Smith et J.A.Bray, on décrit un procédé électrochimique pour mesurer la vitesse de corrosion de matériaux en fer étamé au contact de bains acides, en particulier d'emballages en fer étamé destinés à contenir des jus de fruits. Selon ce procédé, on connecte une source de courant continu à une anode en un métal inerte, par exemple en platine, et à une cathode représentant le matériau métallique à étudier, on immerge les deux électrodes dans le bain acide et on mesure la différence de potentiel et l'intensité du courant qui s'établissent entre la cathode et une électrode de référence immergée dans le bain.

Ce procédé connu fournit seulement une indication sur la vitesse de corrosion du matériau; il ne convient pas pour obtenir une indication sur l'état de surface d'une installation en cours d'exploitation.

Le brevet US-A-3878064 déposé le 27 juillet 1973 aux noms de A.Weisstuch et C.E.Schell concerne un procédé pour mesurer la vitesse de corrosion par piqûre d'un matériau métallique immergé dans un électrolyte aéré. Selon ce procédé, on met en oeuvre une cellule de mesure électrochimique contenant l'électrolyte aéré et une paire d'électrodes identiques représentant le matériau à tester, l'une des électrodes étant enveloppée d'un papier-filtre pour la soustraire à l'oxygène contenu dans l'électrolyte, on mesure le potentiel d'équilibre de chaque électrode par rapport à une électrode de référence commune, immergée dans l'électrolyte aéré, on impose à l'électrode enveloppée du papier-filtre une tension additionnelle réglée de manière que son potentiel par rapport à l'électrode de référence égale le potentiel de l'autre électrode et on mesure l'intensité du courant résultant dans l'électrode enveloppée du papier-filtre.

Ce procédé connu est limité strictement à la mesure de la vitesse instantanée de corrosion par aération différentielle des matériaux métalliques en contact avec des bains aérés. Il est imprécis, en ce sens qu'il est incapable de dissocier une corrosion locale par aération différentielle, d'autres paramètres susceptibles de modifier l'état de surface du matériau, tels qu'une corrosion d'autre nature (par exemple une corrosion provoquée par un couple galvanique), une incrustation ou une érosion.

On a également proposé de contrôler la formation de dépôts ou d'incrustations sur une paroi en contact avec un liquide, par exemple la paroi d'un échangeur de chaleur, en mesurant la variation au cours du temps, de la température de la paroi au moyen d'un thermocouple logé dans la paroi (Chemical Engineering Progress — July 1975, Vol. 71, No 7, p.66 à 72). Cette méthode connue ne se prête toutefois pas à un contrôle de la nature corrosive du liquide. Elle présente en outre le désavantage d'être fortement tributaire des variations de température du milieu en contact avec la paroi.

Dans le brevet Etats-Unis 3 612 998 déposé le I juin 1970 au nom de B.G.Turner et al, on propose un procédé pour détecter une corrosion provoquée par un phénomène électrocinétique créé par le passage d'un liquide à grande vitesse au voisinage d'un élément métallique, le procédé consistant à mesurer le courant électrique engendré par la dissolution continue de l'élément métallique dans le liquide, sous l'effet du phénomène électrocinétique.

Ce procédé connu présente le désavantage de ne s'appliquer qu'à un type particulier de corrosion, provoquée par l'écoulement de liquides à très grande vitesse. Il n'est pas capable de déceler un autre type de corrosion, telle que, par exemple, celle inhérente à l'agressivité des eaux douces, ni une érosion, ni une incrustation. Il présente le désavantage supplémentaire de ne pas être représentatif de l'état de surface de l'élément métallique et, par voie de conséquence, il ne permet pas d'apprécier le type de la corrosion subie par l'élément métallique.

Les procédés connus décrits ci-dessus présentent tous le désavantage supplémentaire d'être impuissants à détecter la cause qui est à l'origine de l'apparition d'un phénomène affectant l'état de surface d'un élément métallique de l'installation. En d'autres termes, bien que décelant, généralement avec précision, l'apparition d'un tel phénomène, par exemple une corrosion locale, ces procédés connus ne fournissent pas d'indication quant aux modifications intempestives qui sont survenues dans les conditions de travail de l'installation et qui sont à l'origine de l'apparition de ce phénomène. De même, ces procédés connus permettent difficilement d'apprécier l'influence qu'exercerait une modification déterminée des conditions de travail sur l'état de surface des éléments métalliques de l'installation.

La Demanderesse a maintenant trouvé un procédé qui permet d'obvier aux inconvénients et aux insuffisances précitées des procédés connus.

En conséquence, l'invention concerne un procédé pour contrôler l'action exercée sur l'évolution de l'état de surface d'un élément métallique d'une installation contenant une phase ionique, par au moins une modification des conditions de travail dans ladite installation par rapport à des conditions de travail standards, suivant lequel on impose un potentiel à une électrode d'au moins une cellule de mesure électrochimique, et on mesure l'intensité du courant électrique résultant dans la cellule; selon l'invention, on met en oeuvre une électrode et une cellule qui reproduisent respectivement l'élément métallique et l'installation dans les conditions de travail standards et, pour le potentiel, le potentiel d'équilibre de l'élément métallique dans la phase ionique de l'installation dont les conditions de travail sont affectées par la modification susdite.

Dans le cadre de l'invention, on entend désigner par l'expression "élément métallique" tout élément solide ou liquide qui, dans les conditions de travail de l'installation, est un conducteur électronique de l'électricité. D'une manière générale, un tel élément peut être choisi, non seulement parmi l'ensemble des métaux et des alliages, mais aussi parmi d'autres substances telles que, notamment, le carbone et le graphite. A titre d'exemple, l'élément métallique peut consister en une paroi en métal, un organe solide en métal (tel qu'un clapet, une soupape, une aube d'une roue d'une pompe, un pignon d'engrenage, une chicane dans une canalisation, etc . . .), un creuset en graphite, ou un liquide tel qu'un métal liquide, par exemple une nappe de mercure.

On entend désigner par l'expression "phase ionique", une phase solide, liquide ou gazeuse qui, dans les conditions de travail de l'installation, est un conducteur ionique de l'électricité.

Dans le cas où la phase ionique est un liquide, celui-ci peut par exemple être un liquide pur, un mélange de liquides, une solution, ou une suspension électrolytique comme l'eau, une solution aqueuse de chlorure de métal alcalin ou de calcium et/ou d'hydroxyde de métal alcalin ou de calcium, une boue, du pétrole brut, etc.

L'expression "conditions de travail standards" désigne un ensemble de conditions connues prédéterminées et maintenues invariables.

Dans le cadre de l'invention, on entend désigner par l'expression "modification des conditions de travail" à la fois une variation de la grandeur d'un paramètre régissant le fonctionnement de l'installation, par rapport à une valeur standard (par exemple une variation de la température ou de la pression de la phase ionique, une variation de sa composition, une variation de la température de l'élément métallique de l'installation en contact avec la phase ionique, une variation du potentiel d'équilibre de l'élément métallique, etc . . .), l'imposition d'une condition de travail supplémentaire par rapport aux conditions standards (par exemple l'incorporation d'un inhibiteur de corrosion dans le cas où la phase ionique est un liquide, l'imposition d'une protection anodique ou cathodique, l'incorporation d'un organe supplémentaire dans l'installation, tel qu'un agitateur, l'apparition d'un couple galvanique entre l'élément métallique considéré et un autre élément métallique de l'installation, etc.) ou la suppression d'une ou plusieurs des conditions de travail standards.

Dans le procédé selon l'invention, la grandeur du courant résultant dans la cellule de mesure électrochimique est une mesure de la vitesse suivant laquelle l'état de surface de l'élément métallique évolue sous l'effet de la modification envisagée par rapport aux conditions de travail standards (par exemple une vitesse de la corrosion et/ou de l'érosion de la surface de l'élément métallique).

Dans une forme de réalisation particulière du procédé suivant l'invention, on impose le potentiel précité à plusieurs électrodes appartenant respectivement à plusieurs cellules de mesure électrochimique distinctes, dans lesquelles règnent des conditions de travail standards distinctes.

Cette forme de réalisation particulière de l'invention permet un contrôle simultané de l'influence qu'exercent séparément plusieurs modifications différentes des conditions de travail, prises isolément ou en combinaison, sur l'évolution de l'état de surface de l'élément métallique de l'installation.

Pour la mise en oeuvre du procédé selon l'invention, on peut utiliser un dispositif de contrôle comprenant une cellule de mesure électrochimique de comparaison, qui contient une électrode de travail et une électrode de référence en contact avec une phase ionique, une source de potentiel couplée aux deux électrodes et un organe de mesure de l'intensité du courant électrique résultant dans la cellule, l'électrode de travail et la phase ionique de la cellule de comparaison reproduisant respectivement l'élément métallique et la phase ionique de l'installation dans les conditions de travail standards, et la source de potentiel comprenant un circuit potentiostatique piloté par une cellule témoin de mesure électrochimique qui contient une électrode de travail et une électrode de référence en contact avec une phase ionique, l'électrode de travail et la phase ionique de la cellule témoin reproduisant respectivement l'élément métallique et la phase ionique de l'installation dont les conditions de travail sont affectuées par la modification précitée.

D'une manière générale, on entend par circuit potentiostatique, un circuit électronique qui est conçu pour maintenir le potentiel d'une électrode en contact avec une phase ionique, égal à celui d'un signal de consigne, quelles que soient les sollicitations d'origine électrique ou électrochimique dont l'électrode est le siège.

Dans une forme de réalisation préférée du dispositif selon l'invention, la cellule témoin, son électrode de travail et sa phase ionique sont constitués respectivement par l'installation, l'élément métallique considéré de celle-ci et sa phase ionique.

Cette forme de réalisation particulière du dispositif selon l'invention apporte l'avantage de simplifier la réalisation de la cellule témoin.

Le procédé et le dispositif selon l'invention présentent la particularité avantageuse de déceler rapidement l'apparition d'une anomalie dans les conditions de travail d'une installation contenant une phase ionique, ainsi que les répercussions que cette anomalie peut avoir sur l'état de surface d'un élément métallique de l'installation.

En variante, le procédé et le dispositif selon l'invention peuvent aussi servir à prévoir quelle conséquence une modification définie des conditions de travail dans l'installation pourrait exercer sur l'état de surface d'un élément métallique d'une installation contenant une phase ionique.

L'invention est applicable au contrôle de l'évolution de l'état de surface de tout élément métallique solide ou liquide d'une installation dans laquelle il se trouve en contact avec une phase ionique. Elle trouve notamment une application intéressante dans le contrôle des phénomènes de corrosion, d'érosion et d'incrustation affectant la paroi des canalisations métalliques pour le transport de liquides, (par exemple des conduites à saumure), les échangeurs de chaleur où on traite des liquides corrosifs, abrasifs ou incrustants, (par exemple les tours de réfrigération ou les évaporateurs, tels que les évaporateurs servant à concentrer des saumures alcalines obtenues par électrolyse de saumures de chlorure de sodium dans des cellules à diaphragme perméable), les parois et les plateaux des colonnes de carbonatation des soudières à l'ammoniaque, etc.

Des particularités et détails de l'invention ressortiront de la description suivante des figures annexées, données à titre d'exemples seulement.

La figure 1 est un schéma d'une forme de réalisation du dispositif selon l'invention;

La figure 2 est un schéma d'une autre forme de réalisation particulière du dispositif selon l'invention;

La figure 3 est un diagramme établi sur la base des résultats d'essais effectués avec le dispositif de la figure 1.

Dans ces figures, des mêmes notations de référence désignent des éléments identiques.

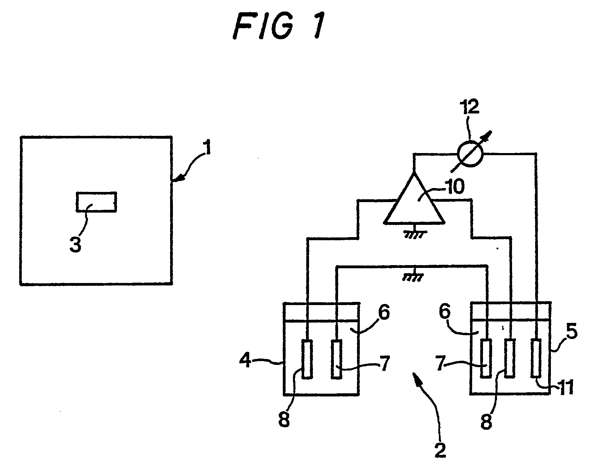

A la figure 1, on a représenté schématiquement en 1, à petite échelle, une installation contenant un liquide ionique et, en 2, à grande échelle, une forme de réalisation particulière du dispositif selon l'invention. Celui-ci est conçu pour contrôler l'évolution de l'état de surface d'un élément métallique 3 de l'installation 1, sous l'effet d'une modification des conditions de travail de l'installation 1 par rapport à des conditions standards.

Selon l'invention, le dispositif 2 comprend deux cellules de mesure électrochimique 4 et 5 qui contiennent chacune un électrolyte 6 dans lequel sont immergées une électrode de travail 7 et une électrode de référence 8, par exemple une électrode au calomel saturé en KC1.

La cellule 4 est une cellule témoin de l'installation 1. A cet effet, son électrode de travail 7 est représentative de l'élément métallique 3 de l'installation (elle est par exemple réalisée dans le même métal ou alliage que l'élément 3 et elle présente éventuellement le même profil et la même rugosité que lui); son enceinte 4 est éventuellement représentative des parois de l'installation 1, qui sont disposées au voisinage de l'élément 3 et qui sont éventuellement en couplage galvanique avec lui, et son électrolyte 6 est identique au liquide traité dans l'installation 1. Il règne par ailleurs dans la cellule témoin 4 les mêmes conditions ambiantes instantanées que dans l'installation 1 (par exemple, la même température, la même pression, la même vitesse d'écoulement du liquide, etc.).

La cellule 5 est une cellule de comparaison. Il y règne des conditions de travail standards prédéterminées. Par exemple, les deux cellules 4 et 5 et leurs électrodes de travail 7 sont identiques, mais l'électrolyte 6 de la cellule 5 diffère de celui de la cellule 4 par la valeur du pH.

Les électrodes de référence 8 des deux cellules 4 et 5 sont connectées respectivement à deux bornes d'un potentiostat 10 relié à une électrode auxiliaire 11 immergée dans l'électrolyte 6 de la cellule de comparaison 5. Les deux électrodes de travail 7 sont reliées à la masse électrique du potentiostat 10. Le potentiostat 10 agit de telle sorte que le potentiel de l'électrode 7 de la cellule 5 soit constamment égal au potentiel d'equilibre de l'électrode 7 de la cellule 4. Le courant électrique qui en résulte est mesuré par un ampèremètre 12 monté en série dans le circuit de l'électrode auxiliaire 11. La grandeur de ce courant électrique est une mesure de l'évolution que l'état de surface de l'élément 3 dans l'installation 1 subit sous l'effet des modifications des conditions de travail dans l'installation 1 par rapport aux conditions de travail standards régnant dans la cellule 5. Cette évolution de l'état de surface de l'élément 3 peut par exemple consister en une accentuation de la corrosion, de l'érosion ou de l'incrustation qui se manifeste à sa surface.

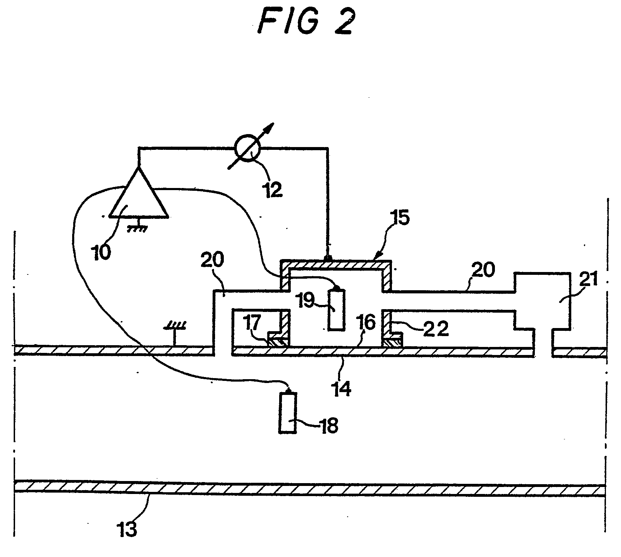

La figure 2 montre schématiquement une forme de réalisation particulière du dispositif selon l'invention, appliqué au contrôle de l'état de surface de la paroi métallique d'une canalisation 13 parcourue par un liquide.

A titre d'exemple, on a considéré le cas particulier où la canalisation 13, qui est en acier, est parcourue par une saumure saturée en chlorure de sodium.

Dans le cas de l'installation de la figure 2, l'objectif du dispositif selon l'invention consiste à contrôler en permanence si la paroi de la canalisation n'est pas le siège d'une corrosion locale due à une présence intempestive d'oxygène dans la saumure. A cet effet, suivant la forme de réalisation représentée à la figure 2, le dispositif de contrôle selon l'invention comprend une cellule témoin formée par la canalisation 13 proprement dite; l'électrode de travail de cette cellule témoin est constituée par la face interne 14 de la paroi de la canalisation 13. La cellule de comparaison du dispositif est formée d'une enceinte annulaire 15 qui est fixée contre la face extérieure 16 de la paroi de la canalisation 13, avec interposition d'un joint d'étanchéité 17 en un matériau non conducteur de l'électricité. L'électrode de travail de la cellule de comparaison est constituée par la face extérieure 16 de la paroi de la canalisation 13.

Deux électrodes de référence indentiques 18 et 19, par exemple des électrodes au calomel saturé en KC1, sont logées respectivement dans la canalisation 13, au voisinage de sa paroi, et dans l'enceinte 15, au voisinage de son électrode de travail 16. Les deux électrodes de référence 18 et 19 sont raccordées respectivement aux bornes d'entrée d'un potentiostat 10, qui est relié à une électrode auxiliaire constituée par la paroi périphérique 22 de l'enceinte 15, qui, à cet effet, est réalisée en un métal inerte vis-à-vis de la saumure. La canalisation 13 est par ailleurs reliée à la masse électrique du potentiostat 10.

L'enceinte 15 est parcourue par de la saumure provenant de la canalisation 13, via une dérivation 20 comprenant une chambre 21 dans laquelle on réalise une désaération de la fraction dérivée de saumure par barbottage d'un gaz inerte. Le débit de saumure dans l'enceinte 15 est réglé de manière à y assurer une vitesse d'écoulement le long de l'électrode 16 égale à celle existant le long de l'électrode 14.

Le potentiostat 10 maintient le potentiel de l'électrode 16 par rapport à l'électrode de référence 19 constamment égal au potentiel d'équilibre de l'électrode 14 dans la saumure circulant à son contact dans la canalisation 13.

Tant que la saumure circulant au contact de l'électrode 14 dans la canalisation 13 ne contient pas d'oxygène, les conditions de travail dans la canalisation 13 et dans l'enceinte 15 sont identiques, de sorte que l'ampèremètre 12 indique un courant nul.

Si la saumure circulant dans la conduite 13 vient accidentellement à contenir un peu d'oxygène, les conditions de travail dans la canalisation 13 deviennent différentes des conditions standards régnant dans l'enceinte 15, puisque la saumure qui y est introduite via le conduit 20 a été au préalable désaérée dans la chambre 21.

Il en résulte immédiatement l'apparition d'un courant électrique indiqué par l'ampèremètre 12. L'apparition de ce courant électrique est une indication de l'apparition d'une modification dans les conditions de travail régnant dans la canalisation 13, par rapport aux conditions standards (cette modification consistant en l'apparition accidentelle d'oxygène dans la saumure); la grandeur de ce courant électrique est par ailleurs une mesure de la vitesse de la corrosion subie par la face 14 de la paroi de la canalisation, dès que l'aire de l'électrode 16 est connue.

Les essais qui vont suivre vont faire apparaître l'intérêt de l'invention.

Dans chacun de ces essais, on a étudié, au moyen du dispositif 2 de la figure 1, l'incidence de la présence d'ions ferriques dans une solution aqueuse molaire d'acide chlorhydrique, sur la vitesse de dissolution de l'acier doux. A cet effet, l'électrolyte 6 de la cellule témoin 4 a consisté en une solution aqueuse molaire d'acide chlorhydrique contenant 100 ppm du produit connu sous le nom Dehyquart (Henkel GmbH) qui est un inhibiteur de corrosion à base d'alkyl pyridinium, ainsi qu'une quantité définie d'ions ferriques, ajoutés sous forme de chlorure ferrique.

L'électrolyte 6 de la cellule de comparaison 5 a consiste en une solution aqueuse molaire d'acide chlorhydrique ayant la même concentration en inhibiteur de corrosion Dehyquart que dans la cellule 4, mais exempte d'ions ferriques.

La température et l'agitation des électrolytes 6 étaient identiques dans les deux cellules 4 et 5 et on y a travaillé à pression atmosphérique.

Les électrodes de travail 7 des deux cellules ont consisté en des barreaux cylindriques en acier doux; le barreau 7 de la cellule de comparaison 5 avait une aire totale égale à 10 cm².

On a utilisé des électrodes au calomel saturé en KC1 à titre d'électrodes de référence 8, et l'électrode auxiliaire 11 a consisté en un fil de platine.

On a effectué cinq essais consécutifs correspondant à des teneurs en ions ferriques dans l'acide chlorhydrique de la cellule témoin 4, respectivement égales à 10 mg/l, 30 mg/l, 100 mg/l, 300 mg/l, et 1000 mg/l. Au cours de chaque essai, qui a duré environ 7 à 8 minutes, on a relevé à l'ampèremètre 12, la valeur de la densité de courant, exprimée en $\mu$A par cm² d'aire de l'électrode 7 de la cellule de comparaison 5, et on a calculé la vitesse de corrosion correspondante de l'électrode (exprimée en mm d'épaisseur par an).

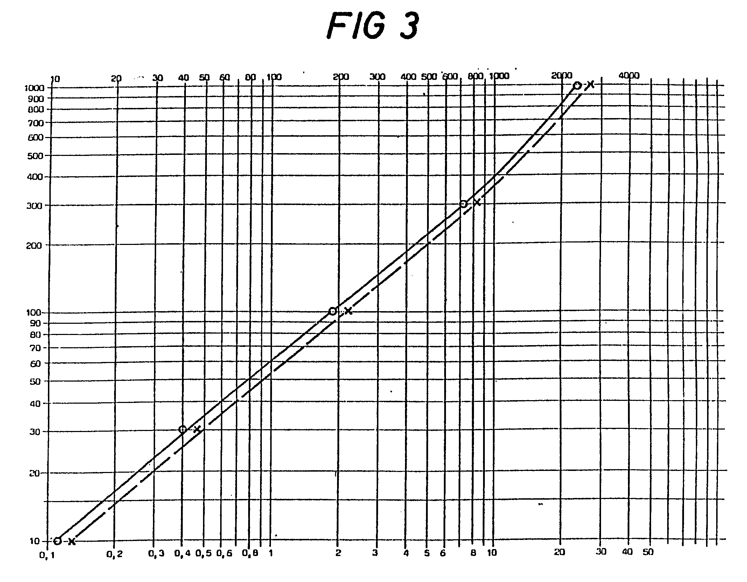

On a reporté les résultats des cinq essais sur le diagramme de la figure 3. Dans celui-ci, l'échelle des ordonnées exprime la concentration de l'acide chlorhydrique en ions ferriques dans la cellule témoin 4, en mg/l, l'échelle supérieure des abscisses exprime la densité de courant, en $\mu$A-cm² et l'échelle inférieure des abscisses exprime la vitesse de corrosion correspondante de l'acier doux, en mm/an. La courbe en trait ininterrompu représente l'évolution de la densité de courant en fonction de la teneur en ions ferriques, et la courbe en traits interrompus représente l'évolution de la corrosion de l'acier doux en fonction de la teneur en ions ferriques.

L'invention n'est pas limitée à la description qui précède, de nombreuses modifications pouvant y être apportées.

## Revendications

1. Procédé pour contrôler l'action exercée sur l'évolution de l'état de surface d'un élément métallique d'une installation contenant une phase ionique, par au moins une modification des conditions de travail dans ladite installation par rapport à des conditions de travail standards, selon lequel on impose un potentiel à une électrode d'au moins une cellule de mesure électrochimique, et on mesure l'intensité du courant électrique résultant dans la cellule, caractérisé en ce qu'on met en oeuvre une électrode et une cellule qui reproduisent respectivement l'élément métallique et l'installation dans les conditions de travail standards et en ce qu'on met en oeuvre le potentiel d'équilibre de l'élément métallique dans la phase ionique de l'installation dont les conditions de travail sont affectées par la modification susdite.

2. Procédé selon la revendication 1, caractérisé en ce qu'on impose le potentiel précité à l'électrode de la cellule par l'intermédiaire d'un circuit potentiostatique.

3. Procédé selon la revendication 1 ou 2, caractérisé en ce qu'on impose le potentiel précité à plusieurs électrodes appartenant respectivement à plusieurs cellules de mesure électrochimique dans lesquelles on impose des conditions de travail standards différentes.

4. Procédé selon l'une quelconque des revendications 1 à 3, caractérisé en ce que l'élément métallique est un élément solide en métal, en contact avec la phase ionique qui est un liquide.

5. Procédé selon l'une quelconque des revendications 1 à 4, caractérisé en ce que l'évolution de l'état de surface de l'élément métallique est une corrosion.

6. Dispositif pour contrôler l'action exercée sur l'évolution de l'état de surface d'un élément métallique d'une installation contenant une phase ionique, par au moins une modification des conditions de travail dans ladite installation par rapport à des conditions de travail standards, comprenant une cellule de mesure électrochimique de comparaison contenant une électrode de travail et une électrode de référence, en contact avec une phase ionique, une source de potentiel couplée aux deux électrodes et un organe de mesure de l'intensité du courant électrique résultant dans la cellule, caractérisé en ce que la source de potentiel comprend un circuit potentiostatique piloté par une cellule témoin de mesure électrochimique comprenant une électrode de travail et une électrode de référence en contact avec une phase ionique, l'électrode de travail et la phase ionique de la cellule témoin reproduisant respectivement l'élément métallique et la phase ionique de l'installation dont les conditions de travail sont affectées par la modification précitée, et l'électrode de travail et la phase ionique de la cellule de comparaison reproduisant respectivement l'élément métallique et la phase ionique de l'installation dans les conditions de travail standards.

7. Dispositif selon la revendication 6, caractérisé en ce que la cellule témoin et son électrode de travail sont constituées respectivement par l'installation et son élément métallique susdit.

8. Dispositif selon la revendication 6 ou 7, caractérisé en ce que les deux cellules de mesure électrochimique comprennent deux enceintes disposées de part et d'autre d'une paroi métallique commune, dont les deux faces opposées constituent chacune une électrode de travail d'une des cellules.

## Patentansprüche

1. Verfahren zur Kontrolle der auf die Entwicklung des Oberflächenzustands eines Metallelements einer eine ionische Phase enthaltenden Einrichtung ausgeübten Einwirkung durch mindestens eine Modifizierung der Arbeitsbedingungen in der Einrichtung gegenüber Standard-Arbeitsbedingungen, wobei eine Spannung an eine Elektrode mindestens einer elektrochemischen Meßzelle angelegt und die Intensität des sich in der Zelle ergebenden elektrischen Stroms gemessen wird, dadurch gekennzeichnet, daß eine Elektrode un eine Zelle verwendet werden, die das Metallelement und die Einrichtung unter den Standard-Arbeitsbedingungen reproduzieren, und daß die Gleichgewichtsspannung des Metallelements in der ionischen Phase der Einrichtung verwendet wird, deren Arbeitsbedingungen durch die genannte Modifizierung beeinflußt sind.

2. Verfahren nach Anspruch 1, dadurch gekennzeichnet, daß die genannte Spannung an der Elektrode der Zelle unter Zuhilfenahme eines Schaltkreiselements mit kontrolliertem Potential angelegt wird.

3. Verfahren nach Anspruch 1 oder 2, dadurch gekennzeichnet, daß die genannte Spannung an mehreren Elektroden, die zu entsprechend mehreren elektrochemischen Meßzellen gehören, angelegt wird, in denen unterschiedliche Standard-Arbeitsbedingungen zur Einwirkung gebracht werden.

4. Verfahren nach einem der Ansprüche 1 bis 3, dadurch gekennzeichnet, daß das Metallelement ein festes Element aus Metall ist, das mit der ionischen Phase, die eine Flüssigkeit ist, in Berührung steht.

5. Verfahren nach einem der Ansprüche 1 bis 4, dadurch gekennzeichnet, daß die Entwicklung des Oberflächenzustands des Metallelements eine Korrosion ist.

6. Vorrichtung zur Kontrolle der auf die Entwicklung des Oberflächenzustands eines Metallelements einer eine ionische Phase enthaltenden Einrichtung ausgeübten Einwirkung durch mindestens eine Modifizierung der Arbeitsbedingungen in der Einrichtung gegenüber Standard-Arbeitsbedingungen, mit einer eine Arbeitselektrode und eine Referenzelektrode, in Berührung mit einer ionischen Phase, enthaltenden elektrochemischen Vergleichs-Meßzelle, mit einer an den beiden Elektroden angeschlossenen Spannungsquelle und mit einem Meßorgan zur Messung der Intensität des sich in der Zelle ergebenden elektrischen Stroms, dadurch gekennzeichnet, daß die Spannungsquelle über ein Schaltkreiselement mit kontrolliertem Potential verfügt, das über eine elektrochemische Simulationsmeßzelle mit einer Arbeitselektrode und einer Referenzelektrode in Berührung mit einer ionischen Phase gesteuert ist, wobei die Arbeitselektrode und die ionische Phase der Simulations-Zelle das Metallelement und die ionische Phase der Einrichtung reproduzieren, deren Arbeitsbedingungen durch die genannte Modifizierung beeinflußt sind, und wobei die Arbeitselektrode und die ionische Phase der Vergleichszelle das Metallelement und die ionische Phase der Einrichtung unter den Standard-Arbeitsbedingungen reproduzieren.

7. Vorrichtung nach Anspruch 6, dadurch gekennzeichnet, daß die Simulationszelle und ihre Arbeitselektrode durch die Einrichtung und deren Metallelement gebildet sind.

8. Vorrichtung nach Anspruch 6 oder 7, dadurch gekennzeichnet, daß die beiden elektrochemischen Meßzellen zwei Räume aufweisen, die beiderseits einer gemeinsamen metallischen Wand angeordnet sind und deren beide einander gegenüberliegende Flächen je eine Arbeitselektrode einer der Zellen bilden.

**Claims**

1. Process for monitoring the action exerted on the change in the surface state of a metal component of an installation containing an ionic phase, by at least one modification of the working conditions in the said installation, compared with standard working conditions, in accordance with which process a potential is applied to an electrode of at least one electrochemical measuring cell and the intensity of the resulting electric current in the cell is measured, characterised in that an electrode and a cell are used which respectively reproduce the metal component and the installation under the standard working conditions, and in that the potential used is the equilibrium potential of the metal component in the ionic phase of the installation of which the working conditions are affected by the abovementioned modification.

2. Process according to Claim 1, characterised in that the abovementioned potential is applied to the electrode of the cell via a potentiostatic circuit.

3. Process according to Claim 1 or 2, characterised in that the abovementioned potential is applied to several electrodes belonging respectively to several electrochemical measuring cells in which different standard working conditions are applied.

4. Process according to any one of Claims 1 to 3, characterised in that the metal component is a solid metal component in contact with the ionic phase, which is a liquid.

5. Process according to any one of Claims 1 to 4, characterised in that the change in the surface state of the metal component is corrosion.

6. Device for monitoring the action exerted on the change in the surface state of a metal component of an installation containing an ionic phase, by at least one modification of the working conditions in the said installation, compared with standard working conditions, which device comprises a comparison electrochemical measuring cell containing a working electrode and a reference electrode in contact with an ionic phase, a source of potential coupled to the two electrodes, and a unit for measuring the intensity of the resulting electric current in the cell, characterised in that the source of potential comprises a potentiostatic circuit governed by a control electrochemical measuring cell comprising a working electrode and a reference electrode in contact with an ionic phase, the working electrode and the ionic phase of the control cell respectively reproducing the metal component and the ionic phase of the installation of which the working conditions are affected by the abovementioned modification, and the working electrode and the ionic phase of the comparison cell respectively reproducing the metal component and the ionic phase of the installation under the standard working conditions.

7. Device according to Claim 6, characterised in that the control cell and its working electrode consist respectively of the installation and its abovementioned metal component.

8. Device according to Claim 6 or 7, characterised in that the two electrochemical measuring cells comprise two chambers located on either side of a common metal wall, the two opposite faces of which each constitute a working electrode of one of the cells.

0 005 297

FIG 1

# FIG 2

FIG 3